(19) Europäisches Patentamt
European Patent Office
Office européen des brevets

(11) **EP 4 020 418 B1**

(12) **EUROPÄISCHE PATENTSCHRIFT**

(45) Veröffentlichungstag und Bekanntmachung des Hinweises auf die Patenterteilung:
**29.01.2025   Patentblatt 2025/05**

(21) Anmeldenummer: **20217327.4**

(22) Anmeldetag: **27.12.2020**

(51) Internationale Patentklassifikation (IPC):
**G07G 1/14** (2006.01)      **G07G 1/00** (2006.01)
**G06Q 20/20** (2012.01)      **G06Q 20/18** (2012.01)
**G01G 19/414** (2006.01)      **A47F 3/00** (2006.01)
**A47F 9/04** (2006.01)

(52) Gemeinsame Patentklassifikation (CPC):
**G07G 1/14; G01G 19/4144; G06Q 20/18;**
**G06Q 20/208; G07G 1/0072;** A47F 9/048

(54) **SELF-CHECKOUT STORE**

SELF-CHECKOUT STORE

MAGASIN À ENCAISSEMENT AUTOMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.06.2022   Patentblatt 2022/26**

(73) Patentinhaber: **Bizerba SE & Co. KG**
**72336 Balingen (DE)**

(72) Erfinder: **Andronic, Tudor**
**9548 Matzingen (CH)**

(74) Vertreter: **Huber, Meik**
**Bizerba SE & Co. KG**
**PF 18/1**
**Wilhelm-Kraut-Straße 65**
**72336 Balingen (DE)**

(56) Entgegenhaltungen:
**US-A1- 2012 284 132      US-A1- 2019 026 593**
**US-A1- 2020 151 696      US-A1- 2020 286 058**
**US-B1- 10 520 353**

**Beschreibung**

Die vorliegende Erfindung betrifft ein Verfahren zum Betrieb einer Verkaufsvorrichtung für Waren, insbesondere Einzelhandelswaren.

Eine Vorrichtung zum bedienerlosen Verkauf, insbesondere zur bedienerlosen Abrechnung in Supermärkten, ist dem Fachmann zum Beispiel aus der EP1717772A1 bekannt. Diese bietet ein System, bei dem der Kunde im Supermarkt wie gewohnt Produkte in einen Einkaufswagen verbringt. Der Kunde scannt beim Gang durch den Supermarkt jedes Produkt, das er in den Einkaufswagen legt. An der Kasse wird die Information über die gescannten Produkte vom Scanner an ein Abrechnungsterminal übertragen. Der Kunde kann dann seinen Einkauf bezahlen. Um den Kunden auf Fehler beim Scanvorgang hinweisen zu können, sind an der Kasse verschiedene Verifikationsverfahren vorgesehen, z. B. basierend auf optischen Verfahren oder auf

Gewichtserkennungsverfahren. Bei diesem Verfahren müssen Teile der Aufgaben des Bedienpersonals, nämlich das manuelle Einscannen jedes einzelnen Artikels, vom Kunden ausgeführt werden. Dies ist für den Kunden ungewohnt und unkomfortabel. Außerdem ist dieses Verfahren fehleranfällig, da der Kunde jeden einzelnen Artikel scannen muss, vor er ihn in den Einkaufswagen legt. Im Falle von Abweichungen zwischen den Artikeln im Einkaufswagen und den gescannten Artikeln muss dies an der Kasse korrigiert werden. Dafür ist Verkaufspersonal notwendig. Dieses System ist nicht als bedienerloses System im 24 Stunden Betrieb einsetzbar.

Die US 2019/026593 A1 und US 2012/284132 A1 sind weitere Beispiele für bekannte Verfahren zum Betrieb von Verkaufsvorrichtungen mit automatischer Entnahmeüberwachung.

Ebenfallens sind dem Fachmann Regalsysteme mit integrierter Bestandsüberwachung, wie in der EP3620760B1 gezeigt, bekannt. Eine bisher unveröffentlichte Europäische Patentanmeldung EP19220148.1 des Anmelders zeigt eine weitere Variante eines Regalsystems mit integrierter Bestandsüberwachung. Auf einer Auflagefläche werden Waren einem Kunden zur Entnahme angeboten. Über eine Gewichtsermittlung wird bestimmt, von welcher Stelle eine Ware von der Auslagefläche entnommen wurde. Eine Bestandsüberwachung wird mit der Information über die entnommenen Waren fortlaufend aktualisiert.

Die US 10 520 353 B1 zeigt ein Regal bei dem Schwerpunktkoordinaten erfasst und Produktbereichen zugeordnet werden.

Aufgabe der Erfindung ist es, ein für den Kunden einfacheres und weniger fehleranfälliges Verfahren zum Betrieb einer Verkaufsvorrichtung für Waren und eine zugehörige Verkaufsvorrichtung zum Selbst-Checkout zur Verfügung zu stellen.

Diese Aufgabe wird durch ein Verfahren zum Betrieb einer Verkaufsvorrichtung für Waren nach Anspruch 1 gelöst. Erfindungsgemäß wird ein Verfahren zum Betrieb einer Verkaufsvorrichtung für Waren vorgeschlagen. Dabei handelt es sich insbesondere um Einzelhandelswaren. Das Verfahren umfasst die Schritte:

- Detektieren eines entnommenen Artikels und Bestimmung von dessen Artikeldaten. Dieser Schritt wird von einem Regal mit automatischer Entnahmeüberwachung ausgeführt. Automatische Entnahmeüberwachung meint in diesem Zusammenhang, dass das Regal derart ausgestaltet ist, dass die Entnahme eines Artikels detektiert werden kann. Entnahmeüberwachung in diesem Zusammenhang ist nicht so zu verstehen, dass das Regal oder ein mit dem Regal verbundenes Warenwirtschaftssystem notwendigerweise den aktuellen Warenbestand in dem Regal kennen oder errechnen muss. Erfindungsgemäß handelt es sich um ein Regal mit integrierter Bestandsüberwachung, dessen Funktionalität zur Warendetektion für die Bestandsüberwachung gleichzeitig als Entnahmeüberwachung für das Verfahren zum Betrieb der Verkaufsvorrichtung genutzt wird. In einer nicht beanspruchten Ausführungsform erfolgt das Detektieren eines entnommenen Artikels mit einer Kamera oder mit einem optischen Sensor. Erfindungsgemäß erfolgt das Detektieren eines entnommenen Artikels mit Hilfe von Gewichtssensoren.
- Empfangen der Artikeldaten des entnommenen Artikels. Diese Artikeldaten werden von einer Steuervorrichtung empfangen.
- Hinzufügen der Artikeldaten des entnommenen Artikels zu einer Liste von zur Bezahlung vorgesehenen Artikel. Dieser Schritt wird mit der Steuervorrichtung ausgeführt. Die Liste von zur Bezahlung vorgesehener Artikel umfasst Artikel, die aus den Regalen bereits entnommen wurden, die jedoch noch nicht bezahlt wurden. Diese Liste wird fortlaufend durch die Steuervorrichtung aktualisiert.
- Detektieren von Artikeln, für die ein Bezahlvorgang ausgeführt werden soll. Dieser Schritt wird mit einer Detektionsvorrichtung ausgeführt. Die Detektionsvorrichtung umfasst mindestens einen Sensor und eine Auswerteeinrichtung. Zur Detektion der Artikel werden der Auswerteeinrichtung mindestens Daten des Sensors und die Liste der zur Bezahlung vorgesehenen Artikel als Eingangsgrößen zur Verfügung gestellt.

Der Fachmann versteht, dass die Detektionsvorrichtung nicht notwendigerweise ein einzelnes Modul oder Bauteil ist. So können Teile der Detektionsvorrichtung zum Beispiel in einer Verkaufsvorrichtung untergebracht sein und andere Teile der Detektionsvorrichtung können zum Beispiel in einem Netzwerk oder einer Computing Cloud untergebracht sein. Die Detektionsvorrichtung ist vielmehr als zusammenwirkendes System zu verstehen, das aus mehreren einzelnen und gegebenenfalls verteilt angeordneten Teilen besteht.

Bei Erkennungsverfahren in Self-Checkout Vorrichtungen, ungeachtet der Erkennungsmethode, die sie benutzen, kann die Erkennung von Objekten, d. h. die Erkennung der zu bezahlenden Artikel, fehlerhaft sein.

Verfahren zum Erkennen von Artikeln, insbesondere wenn mehrere Artikel in einem Einkaufswagen oder einem Einkaufskorb liegen, sind oft Verfahren, die aufgrund von mit Sensoren erkannter Eigenschaften auf den entsprechenden Artikel zurückschließen. Dabei können verschiedene Eingangsgrößen zu Grunde gelegt werden, die zu einer jeweiligen Wahrscheinlichkeit für einen bestimmten Artikel führen. Wenn ein Artikel aus einer Gruppe von Artikeln erkannt werden soll, sind diese Verfahren umso fehlerhafter, umso mehr, insbesondere umso mehr ähnliche Artikel in der Gruppe von Artikeln zur Verfügung stehen. In einem kleinen oder mittleren Ladengeschäft kann das Sortiment mehrere hundert bis hin zu wenigen tausend Artikel umfassen. Diese Artikel sind in der Verkaufsvorrichtung hinterlegt und müssen mit dem Detektionsverfahren erkannt werden. Besonders wenn Artikel zum Beispiel in einem Einkaufswagen aufeinander liegen und sich teilweise verdecken, so dass optische Sensoren die Artikel nur teilweise erkennen, kommt es zu Fehlern bei der Detektion der Artikel.

In einer Ausführungsform erkennt das Verfahren zum Detektieren von Artikeln, für die ein Bezahlvorgang ausgeführt werden soll, nur Artikel, die zur Liste der zur Bezahlung vorgesehenen Artikel gehören.

Das Verfahren gemäß der Erfindung hat den Vorteil, dass nicht angenommen wird, dass Artikel aus dem kompletten Sortiment des Ladengeschäfts sich im Einkaufswagen oder Einkaufskorb befinden. Vielmehr macht sich die Erfindung die Tatsache zunutze, dass nur Artikel, die aus einem Regal genommen wurden, für den Bezahlvorgang in Frage kommen können. Artikel, die zwar im Sortiment des Ladengeschäftes vorhanden sind, jedoch (noch) nicht aus dem Regal genommen wurden, sollen auch nicht bezahlt werden. Die Liste der zur Bezahlung vorgesehenen Artikel, das heißt, die Artikel, die aus dem Regal genommen wurden und noch nicht an der Kasse bezahlt wurden, sind Artikel, die ein Kunde möglicherweise bezahlen möchte. Die Auswerteeinrichtung wählt aufgrund der vom Sensor gelieferten Daten nur Artikel aus dieser Liste aus. Die Wahrscheinlichkeit der richtigen Erkennung der Artikel nimmt aufgrund der Einschränkung der möglichen Artikel (Lösungen) im Objekterkennungsverfahren erheblich zu.

In einer Ausführungsform ist der mindestens eine Sensor der Detektionsvorrichtung mindestens eine Kamera. Insbesondere handelt es sich dabei um mindestens eine CCD Kamera. In einer Ausführungsform sind die Daten des mindestens einen Sensors Bilddaten. In einer Ausführungsform ist der mindestens eine Sensor eine Wägezelle. In einer Ausführungsform sind die Daten des mindestens einen Sensors Gewichtsdaten.

In einer Ausführungsform umfasst der Schritt des Detektierens von Artikeln, für die ein Bezahlvorgang ausgeführt werden soll, den Schritt:

-   Anwenden eines Verfahrens zur Objekterkennung in der Auswerteeinrichtung. Das Verfahren zur Objekterkennung erkennt in den Daten des mindestens einen Sensors objektbeschreibende Attribute. Diese objektbeschreibenden Attribute werden mit objektbeschreibenden Attributen von Artikeln vergleichen, die in der Liste der zur Bezahlung vorgesehenen Artikel sind. Das hat den Vorteil, dass das Verfahren zur Objekterkennung als mögliche Lösungen nur Lösungen zulässt, das heißt nur Artikel detektieren kann, die aus einem Regal genommen wurden. Diese Artikel müssen folglich noch bezahlt werden. Artikel, die nicht aus dem Regal genommen wurden, sind zwar noch im Ladengeschäft im Sortiment vorhanden, aber aktuell soll es für diese Artikel keinen Bezahlvorgang geben. Deswegen können diese Artikel von dem Verfahren zur Objekterkennung in den Daten des Sensors auch nicht erkannt werden. In einer Ausführungsform ist das Verfahren zur Objekterkennung ein optisches Verfahren und wird auf Bilddaten eines Einkaufskorbes oder eines Einkaufswagens angewendet. Das optische Verfahren basiert in einer Ausführungsform auf Kantenerkennung, Transformationen, Größen und/oder Farberkennung.

Erfindungsgemäß mindestens ein Regal mit automatischer Entnahmeüberwachung zum Detektieren des entnommenen Artikels folgende Schritte ausführt:

-   Empfangen eines Signals von mindestens zwei, vorzugsweise drei oder vier Wägezellen, die in den Ecken eines starren Körpers, der einen Auslagebereich mit mindestens zwei Produktbereichen bildet, angeordnet sind. Das heißt, der Auslagebereich eines Regals ist auf mehreren Wägezellen abgestützt. Die Wägezellen ermitteln die Gewichtskraft des Auslagebereichs und der Artikel, die auf dem Auslagebereich stehen. Die Signale der Wägezellen entsprechen den Gewichtskräften im Bereich der Ecken des starren Körpers.
-   Ermitteln von Schwerpunktkoordinaten und einer Gesamtgewichtskraft aus den empfangenen Signalen. Diese werden mit einer Auswerteeinheit aus den Signalen der Wägezellen ermittelt.
-   Empfangen eines Signals, das einer neuen Gewichtskraft entspricht, von mindestens einer Wägezelle und ermitteln mit der Auswerteeinheit neuer Schwerpunktkoordinaten aus den von den Wägezellen aktuell empfangenen Daten.
-   Ermitteln eines Produktbereichs und eines Gewichts der aus dem Produktbereich entnommenen Artikel.
-   Bestimmen der Artikeldaten des aus dem Regal entnommenen Artikels aufgrund des ermittelten Produktbereichs und bestimmen der Anzahl der entnommenen Artikel aufgrund des dem Produktbereichs entnommenen Gewichts und des spezifischen Gewichts des Artikels.

In einer Ausführungsform wird der Auslagebereich durch einen Regalfachboden gebildet, zum Beispiel durch ein Regalbrett oder ein Gitterboden eines Regalfachs.

Mit den Schwerpunktkoordinaten kann der Bereich auf einem starren Körper ermittelt werden, von dem ein Gegenstand entnommen wurde. Bei Regalen ist es oft der Fall, dass ein starres Regalbrett von einem Gestell getragen wird. Auf dem Regalbrett sind mehrere Fächer für verschiedene Artikel vorgesehen. Mit Hilfe von mehreren Wägezellen, die vorzugsweise an den Ecken des starren Körpers angebracht sind, kann über die Ermittlung der Schwerpunktkoordinaten der Bereich auf dem starren Körper und somit der Produktbereich und somit auch ein zugeordneter Artikel ermittelt werden. Mit Hilfe des Gesamtgewichts der entnommenen Artikel lässt sich die Anzahl der aus dem Produktbereich entnommenen Artikel festgesellen.

In einer Ausführungsform ermittelt die Auswerteeinheit bei einer Änderung des Gesamtgewichts einen Vektor zwischen den vorhergehenden Schwerpunktkoordinaten und den neuen Schwerpunktkoordinaten. Der von einer Steuereinrichtung bestimmte Regalbereich wird aus dem Vektor und dem Gesamtgewicht von der Steuereinrichtung ermittelt.

In einer Ausführungsform tariert die Auswerteeinheit alle Wägevorrichtungen periodisch und gleichzeitig. Die aus den Daten der Wägevorrichtungen gebildeten Schwerpunktskoordinaten bilden den Schwerpunkt ab, an dem etwas aus dem Regalfachboden entnommen oder zugefügt wurde. In einer Ausführungsform bildet die Auswerteeinheit zur Ermittlung der neuen Schwerpunktskoordinaten für jede Wägevorrichtung die Differenz aus einem neuen Gewichtswert und einem vorhergehenden Gewichtswert. Das heißt, bei einer Entnahme eines Produkts aus dem Regalfachboden wird die Gewichtsänderung an jeder Wägevorrichtung separat ermittelt. Aus den vier Differenzwerten, das heißt, aus der Gewichtsänderung an jeder Wägevorrichtung, werden die neuen Schwerpunktskoordinaten ermittelt. Beide Ausführungsformen führen dazu, dass die gemessenen Gewichtswerte der vier Wägevorrichtungen separat betrachtet werden und nicht ein Vektor berechnet wird, der skaliert werden muss. Somit sind diese beiden Ausführungsformen weniger sensitiv gegenüber Toleranzen bei der Gewichtswertbestimmung durch die Wägevorrichtungen.

In einer Ausführungsform ist ein Verfahren zur Objekterkennung ein Verfahren, das einen gemessenen Gewichtswert mit dem Einzelgewicht der Artikel auf der Liste der zur Bezahlung vorgesehenen Artikel vergleicht. In einer Ausführungsform werden optische Verfahren und gewichtswertbasierte Verfahren bei dem Verfahren zur Objekterkennung kombiniert. Werden über eine Kamera mehrere Objekte erkannt und deren Erkennung auf der Grundlage der Liste der zur Bezahlung vorgesehenen Artikel ermittelt, so geht als weiterer Parameter das Gesamtgewicht dieser Artikel ein. Das Verfahren zur Objekterkennung summiert die Einzelgewichte der erkannten Artikel aus der Liste mit den zur Bezahlungen vorgesehenen Artikel und überprüft diese Summer anhand des gemessenen Gesamtgewichts.

In einer Ausführungsform umfasst das Verfahren folgende Schritte:

- Ermitteln eines Gesamtpreises für einen Bezahlvorgang aus der Summe aller Einzelpreise für die detektierten Artikel, für die ein Bezahlvorgang ausgeführt werden soll, und
- Ausführen eines Bezahlvorgang über ein Mobile Payment Verfahren, eine EC-Karte oder Kreditkarte oder über eine Barzahl-Vorgang.

Beispielsweise wird eine Verkaufsvorrichtung zum Selbst-Checkout von Waren in einem Ladengeschäft, insbesondere in einem Supermarkt vorgeschlagen. Das Ladengeschäft umfasst mindestens ein Regal mit automatischer Entnahmeüberwachung und ein Netzwerk zum Austausch von Daten. Die Verkaufsvorrichtung umfasst eine Steuervorrichtung zur Steuerung der Verkaufsvorrichtung und eine Kommunikationseinheit zum Empfangen von Daten aus dem Netzwerk sowie eine Datenbank zum Speichern von Artikeldaten und zu den Artikeln dazugehörigen objektbeschreibenden Attributen. Die Steuervorrichtung ist ausgelegt, über das Netzwerk von dem mindestens einen Regal mit automatischer Entnahmeüberwachung Artikeldaten von entnommenen Artikeln zu empfangen. Die Steuervorrichtung ist ausgelegt, daraus eine Liste der zu bezahlenden Artikel zu ermitteln. Die Verkaufsvorrichtung umfasst eine Detektionsvorrichtung mit mindestens einem Sensor und einer Auswerteeinrichtung. Die Detektionsvorrichtung bestimmt mit der Auswerteeinrichtung auf Grundlage der Daten des Sensors und der Liste der zur Bezahlung vorgesehenen Artikel, für welche Artikel ein Bezahlvorgang ausgeführt werden soll.

Beispielsweise erkennt die Auswerteeinrichtung aus den Daten des mindestens einen Sensors objektbeschreibende Attribute. Diese objektbeschreibenden Attribute werden mit objektbeschreibenden Attributen von Artikeln verglichen, die in der Liste der zur Bezahlung vorgesehenen Artikel aufgeführt sind.

Beispielsweise ist die Verkaufsvorrichtung ein Teil eines Verbundes von mehreren Verkaufsvorrichtungen in dem Ladengeschäft. Die Datenbank ist eine gemeinsame Datenbank für alle Verkaufsvorrichtungen des Verbundes von mehreren Verkaufsvorrichtungen. Die Verkaufsvorrichtungen sind über ein Netzwerk mit der Datenbank verbunden.

Beispielsweise befinden sich zumindest Teile der Detektionsvorrichtung, der Steuervorrichtung, der Auswerteeinrichtung und/oder der Datenbank außerhalb des Ladengeschäfts, insbesondere auf einem Server oder in einem Cloud-Netzwerk. Die Verkaufsvorrichtung greift über ein Netzwerk auf diese Teile der Detektionsvorrichtung, der Steuervorrichtung, der Auswerteeinrichtung und/oder der Datenbank zu.

In einer Ausführungsform umfasst das Verfahren zum Betrieb der Verkaufsvorrichtung den Schritt:

- Zurücksetzten, zu einem Zeitpunkt, insbesondere bei Öffnung des Ladengeschäfts am Morgen der Liste mit den zur Bezahlung vorgesehen Artikeln.

Das heißt, zu diesem Zeitpunkt werden alle Artikel, die zur Bezahlung vorgesehen sind, aber noch nicht bezahlt wurden, aus der Liste gelöscht. Dies kann zum Beispiel kurz vor Öffnung des Ladengeschäfts am Morgen sein. Andererseits kann zum Beispiel ein Mitarbeiter diesen Zeitpunkt manuell auswählen und die Liste manuell löschen, wenn er sieht, dass sich keine Kunden im Ladengeschäft aufhalten. Zu dem Zeitpunkt, an dem zum Beispiel kein Kunde im Ladengeschäft ist, dürfen auch keine Artikel auf der Liste der zur Bezahlung vorgesehen Artikel vermerkt sein. Sind dennoch Artikel auf der Liste, so ist beim Verkaufsvorgang ein Fehler passiert. Entweder wurden die Artikel beim Bezahlvorgang nicht korrekt abgerechnet, der Kunde hat ein Artikel aus dem Regal genommen und ihn an einer anderen Stelle im Ladengeschäft abgelegt oder die Entnahme des Artikels aus dem Regal mit automatischer Entnahmeüberwachung ist falsch detektiert worden. Das Löschen der Liste gleicht einem Reset des Systems, so dass sich die fehlerhaften Einträge nicht auf Dauer in der Liste ansammeln und die Performance des Systems beeinträchtigen. Die Information, wieviel Artikel auf der Liste der zur Bezahlung vorgesehenen Artikel gelöscht werden müssen, gibt auch wieder, wie viele Artikel zum Beispiel durch Diebstahl unerlaubt entwendet wurden.

In einer Ausführungsform umfasst das Verfahren zum Betrieb einer Verkaufsvorrichtung den Schritt:

- verifizieren, mit der Auswerteeinrichtung, ob die detektierten Artikel mit den Daten der Sensoren, insbesondere die Daten von mindestens einem optischen Sensor und von mindestens einem Gewichtssensor übereinstimmen und/oder die Wahrscheinlichkeit eines korrekten Detektierens der Artikel einen Schwellwert überschreitet, und
- falls die Wahrscheinlichkeit des korrekten Detektierens den Schwellwert nicht überschreitet und/oder die keine Übereinstimmung der Daten erkannt wird, vorschlagen mindestens eines Artikels aus der Liste der zur Bezahlung vorgesehen Artikel auf einer Eingabevorrichtung der Verkaufsvorrichtung zur manuellen Auswahl durch einen Kunden.

Einige Ausführungsformen der Erfindung sind in den Zeichnungen beispielhaft gezeigt und nachfolgend beschrieben. Es zeigen, jeweils in schematischer Darstellung:

Fig. 1      ein System zum Selbst-Checkout in einem Ladengeschäft,

Fig. 2      eine Verkaufsvorrichtung in eine ersten Ausführungsform,

Fig. 3      eine Verkaufsvorrichtung in einer zweiten Ausführungsform,

Fig. 4      eine Regalkonsole mit zwei Wägevorrichtungen,

Fig. 5      ein Blockdiagramm eines Regals,

Fig. 6      ein Verfahren zum Betrieb eines Regals,

Fig. 7      ein erstes Verfahren zur Bestimmung eines Ortes auf dem Regalfachboden, an dem ein Produkt entnommen oder zugefügt wurde,

Fig. 8      ein zweites Verfahren zur Bestimmung eines Ortes auf dem Regalfachboden, an dem ein Produkt entnommen oder zugefügt wurde,

Fig. 9      ein drittes Verfahren zur Bestimmung eines Ortes auf dem Regalfachboden, an dem ein Produkt entnommen oder zugefügt wurde, und

Fig. 10     ein Verfahren zum Selbst-Checkout in einem Ladengeschäft.

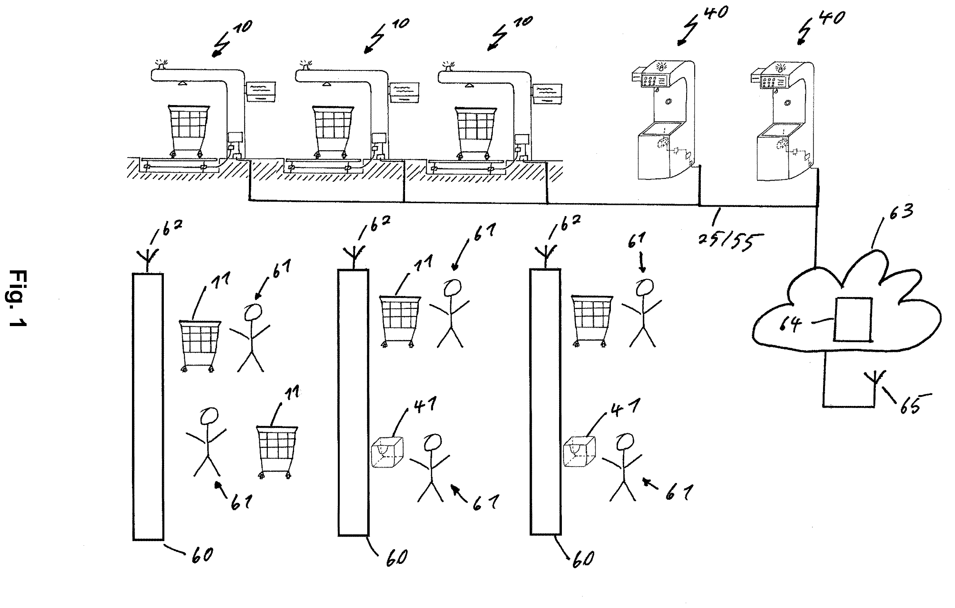

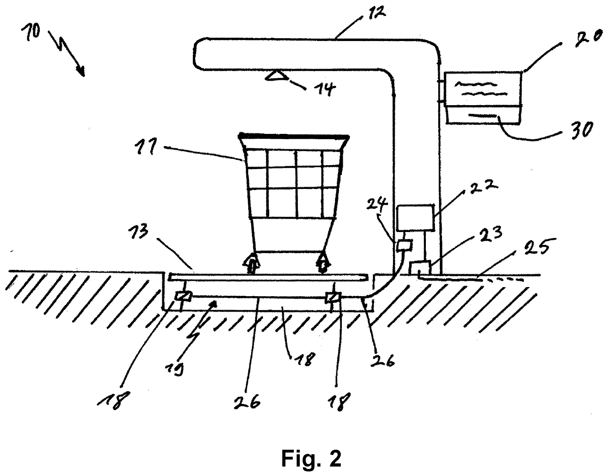

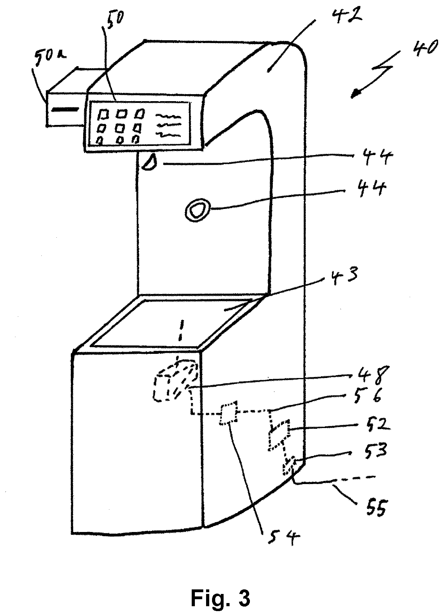

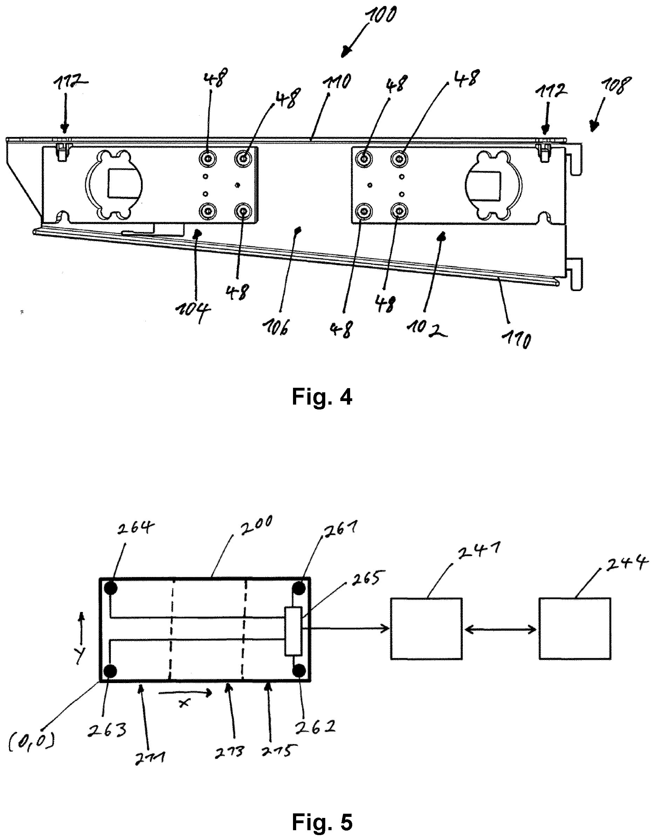

Fig. 1 zeigt ein System zum Selbst-Checkout in einem Ladengeschäft. Im Ladengeschäft sind eine Vielzahl von Kunden 61 vorhanden, die beim Selbst-Checkout an den Verkaufsvorrichtungen 10, 40 selbst zu Bedienern werden. Die Kunden 61 gehen mit einem Einkaufswagen 11 oder einem Einkaufskorb 41 an die Regale 60, um entsprechende Produkte zu entnehmen und sie in ihren Einkaufswagen 11 oder Einkaufskorb 41 zu legen. Das Ladengeschäft umfasst eine oder mehrere Verkaufsvorrichtungen 10, die für einen Selbst-Checkout mit einem Einkaufswagen 11 geeignet sind und im Detail in Fig. 2 gezeigt sind. Das Ladengeschäft umfasst alternativ oder zusätzlich eine oder mehrere Verkaufsvorrichtungen 40, die für den Selbst-Checkout mit einem Einkaufskorb 41 geeignet sind und die im Detail in Fig. 3 gezeigt sind. Die Verkaufsvorrichtungen 10, 40 sind über ein Netzwerk 25, 55 mit einer Computing Cloud 63 verbunden. Die Computing Cloud 63 umfasst eine Steuervorrichtung 64, die von den Verkaufsvorrichtung 10, 40 über das Netzwerk 25, 55 Bilder und Gewichtswerte von einem Einkaufswagen 11 oder einem Einkaufskorb 41 übermittelt bekommt. Die Regale 60 sind mit einer automatischen Entnahmeüberwachung ausgerüstet, deren Funktion mit Bezug zu den Zeichnungen Fig. 4 bis Fig. 9 detailliert beschrieben ist. Entnimmt ein Kunde ein Produkt aus dem Regal, so übermittelt das Regal mit einer Kommunikationsvorrichtung 62 die Artikeldaten und die Anzahl der entnommenen Artikel an die Computing Cloud 63. Die Kommunikation findet zum Beispiel über ein drahtloses Netzwerk 65 (wie in Fig. 1 angedeutet), insbesondere ein öffentliches Mobilfunknetz oder ein WLAN des Ladengeschäfts oder ein (in Fig. 1 nicht gezeigtes) drahtgebundenes Netzwerk, insbesondere ein LAN, statt. In einer Ausführungsform umfasst das Computing Cloud 63 eine Steuervorrichtung 64. In einer Ausführungsform ist das Netzwerk 63 eine Computing Cloud, das heißt ein Cloud Netzwerk, in der die Funktion der Steuervorrichtung 64 realisiert ist. In einer Ausführungsform ist anstelle der Computing Cloud 63 ein Netzwerk vorgesehen, das ausschließlich zur Datenübertragung vorgesehen ist und die Steuervorrichtung ist in einer oder in allen der Verkaufsvorrichtungen 10, 40 vorgesehen. In einer Ausführungsform ist die Steuervorrichtung 64 ein Server in einem Netzwerk 25, 55, 62, 63, 65, wobei das Netzwerk 25, 55, 62, 63, 65 Server 64, Regale 60 und Verkaufsvorrichtungen 10, 40 verbindet.

Fig. 2 zeigt eine Verkaufsvorrichtung 10 in einer ersten Ausführungsform. Die Verkaufsvorrichtung 10 umfasst ein Gestell 12 unter das ein Einkaufswagen 11 geschoben werden kann. Der Einkaufswagen 11 hat eine definierte Position (Ruheposition) unter dem Gestell 12 auf einer Auflageplatte 13. Die Auflageplatte 13 ist eine Lastplatte einer Waage und mit der Krafteinleitungsseite einer oder mehrerer Wägezellen 18 mechanisch verbunden. Die Waage bestimmt das Gesamtgewicht des Einkaufswagens 11 mit seinem Inhalt. Das Gestell 12 umfasst weiter mindestens eine Kamera 14, die zum Erstellen von mindestens einem Bild einer Ansicht einer offenen Seite des Einkaufswagens 11 ausgebildet ist. Bei einem Einkaufswagen 11 ist normalerweise die obere Seite offen. Eine offene Seite im Sinne dieser Offenbarung ist jedoch auch zum Beispiel ein Seitenteil des Einkaufswagens, dass aus transparentem Material besteht. Im Rahmen der Erfindung soll als offene Seite ebenfalls gelten, wenn der Einkaufswagen aus einem grobmaschigen Metallgitter besteht, durch das hindurch eine Bildaufnahme des Inhalts des Einkaufswagens gemacht werden kann. Nicht als offene Seite ist im Rahmen dieser Offenbarung zu verstehen, wenn die Seite eines Einkaufswagens aus nicht transparentem Kunststoff besteht oder durch eine nicht transparente Werbetafel verdeckt ist.

Die mindestens eine Wägezelle 18, insbesondere vier Wägezellen 18, ist mit einer Gewichtswertverarbeitungsvorrichtung 24 verbunden, die aus den Signalen der Wägezelle 18 oder der Wägezellen 18 einen Gewichtswert des Einkaufswagens 11 ermittelt. Die Gewichtswertverarbeitungsvorrichtung 24 umfasst einen Gewichtswertspeicher zum Speichern des Gewichtswertes.

Die mindestens eine Kamera 14 und die Gewichtswertverarbeitungsvorrichtung 24 sind mit einer Steuerung 22 verbunden und übergeben die ermittelten Daten an die Steuerung 22. Die Steuerung 22 ist mit einer Kommunikationsvorrichtung 23 verbunden, über die die Steuerung 22 Daten wie Bilder und Gewicht an ein Netzwerk 25 übermittelt und mindestens einen Verkaufspreis und eine Auflistung der Artikel im Einkaufswagen 11 vom Netzwerk 25 empfängt. Die Verkaufsvorrichtung umfasst eine Ein-/Ausgabeeinheit 20, mit der ein Bediener mit der Verkaufsvorrichtung 10 interagieren kann. Die Ein-/Ausgabeeinheit 20 umfasst ebenfalls eine Bezahleinheit 30, an der vorzugsweise bargeldlos bezahlt werden kann. Die Ein-/Ausgabeeinheit 20 zeigt die vom Netzwerk 25 empfangen Daten, insbesondere die Artikel im Einkaufswagen 11 und deren Preis an und leitet den Bediener durch einen Bezahlvorgang mit der Bezahleinheit 30. Nach der Bezahlung der Artikel gibt die Ein-/Ausgabeeinheit 20 dem Bediener einen entsprechenden Hinweis aus, dass er das Ladengeschäft mit seinen Einkäufen verlassen kann. Optional umfasst die Ein-/Ausgabeeinheit 20 einen Drucker, um dem Bediener einen Bon über den abgeschlossenen Kauf auszudrucken. Nachdem der Bediener die Artikel im Einkaufswaagen 11 bezahlt hat, sendet die Steuerung 22 über das Netzwerk eine Nachricht, dass diese Artikel bezahlt wurden. Diese Nachricht wird in der sich im Netzwerk 63 befindlichen Steuervorrichtung 64 dazu benutzt, um die bezahlten Artikel von der Liste der zur Bezahlung vorgesehenen Artikel zu streichen, wie Folgend noch detaillierter erläutert wird.

Fig. 3 zeigt eine Verkaufsvorrichtung 40 in einer zweiten Ausführungsform. Diese Ausführung ist geeignet, um den Inhalt eines Einkaufskorbes 41 zu detektieren und abzurechnen. Ein Gestell 42 ist derart ausgebildet, dass es eine Auflage für den Einkaufskorb 41 bildet, die sich nicht auf dem Boden, sondern auf einer für den Bediener ergonomischen Höhe befindet. Das Gestell 42 umfasst einen oberen Teil, der über den abgestellten Einkaufskorb 41 ragt. Im Gestell ist eine Auflageplatte 43 ausgebildet, auf der der Einkaufskorb 41 mit seiner Unterseite abgestellt werden kann. Das Gestell 42 haltert mindestens eine Kamera 44, die derart positioniert ist, dass sie von einer offenen Seite des Einkaufskorbes 41 ein Bild des Inhalts des Einkaufskorb 41 machen kann.

Die Verkaufsvorrichtung 40 umfasst eine Waage. Eine Auflageplatte 43 bildet die Lastplatte der Waage und ist mechanisch mit der Krafteinleitungsseite einer im Gestell 42 untergebrachten Wägezelle 48 verbunden. Die Wägezelle 48 ist mit einer Gewichtswertverarbeitungsvorrichtung 54 verbunden, die aus den Signalen der Wägezelle 48 einen Gewichtswert des Einkaufskorbes 41 ermittelt und in einem Gewichtswertspeicher speichert. Auch in dieser Ausführungsform kann die Auflageplatte 43 von mehreren Wägezellen 48 gehalten sein. Da ein Einkaufskorb 41 nicht so schwer und nicht so groß ist wie ein Einkaufswagen 11 und die Auflageplatte 43 dementsprechend kleiner ausgestaltet ist als in der ersten Ausführungsform, ist eine Wägezelle 48 zur Gewichtsbestimmung in einer bevorzugten Ausführungsform ausreichend. Die Gewichtswertverarbeitungsvorrichtung 54 gibt denn Gewichtswert an eine Steuerung 52 weiter, die ihrerseits mit einer Kommunikationsvorrichtung 53 verbunden ist. Die Steuerung 52 steuert die Abläufe in der Verkaufsvorrichtung 40. Die Kommunikationsvorrichtung 53 ist mit einem Netzwerk 55 verbunden. Die von der Steuerung 52 vorgegebenen Abläufe und die durch die Kommunikationsvorrichtung 53 über das Netzwerk 55 übermittelten Daten sind analog zum ersten Ausführungsbeispiel. Der obere Teil des Gestells 42 umfasst eine Ein-/Ausgabeeinheit 50. Die Ein-/Ausgabeeinheit 50 kann in den Rahmen des Gestells 42 integriert sein und ist zum Beispiel ein Touchscreen. An dem Gestell ist eine Bezahleinheit 50a angebracht. Die Bezahleinheit 50a kann auch in die Ein-/Ausgabeeinheit 50 integriert sein. Die Bezahleinheit 50a dient dem bargeldlosen Bezahlen an der Verkaufsvorrichtung 40.

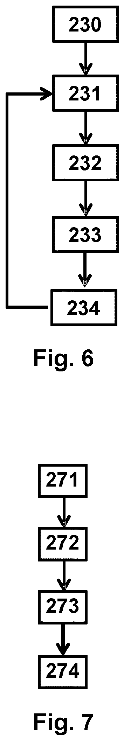

Fig. 4 zeigt eine Regalkonsole 100 in einer Seitenansicht auf die Innenseite. Die Regalkonsole 100 besteht aus einem sich in horizontaler Richtung erstreckenden Ausleger 106, der aus einem vertikal angeordneten Blech gebildet ist. Um die Stabilität zu erhöhen, weist der Ausleger 106 an seiner Oberseite und an seiner Unterseite eine Versteifungsrippe 110 auf. Die Versteifungsrippe ist realisiert durch eine Biegung des Blechs um 90°. Die Regalkonsole 100 umfasst an einem axialen Ende des Auslegers 106 eine Verankerungsvorrichtung 108 in der Form von zwei Haken, mit der die Regalkonsole in einer Regalschiene befestigt werden kann. Regalschienen sind oft als vertikal angebrachte Schienen mit übereinander angeordneten Schlitzen ausgebildet, so dass die Regalkonsolen auf verschiedenen Höhen an der Regalschiene befestigt werden können. Zwei Regalkonsolen 100, die an zwei beabstandeten Regalschienen auf gleicher Höhe angebracht sind, tragen einen Regalfachboden und bilden so ein Regalfach. Der Ausleger 106 ist dreieckförmig ausgebildet, das heißt, im Bereich der Verankerungsvorrichtung 108 ist die Höhe des Auslegers größer als am gegenüberliegenden axialen Ende, das dem vorderen Bereich des Regalfachs entspricht. Der Ausleger umfasst ferner zwei Wägevorrichtungen 102, 104, wobei eine Wägevorrichtung 102 im Bereich der Verankerungsvorrichtung 108 und eine Wägevorrichtung 104 im Bereich des anderen axialen Endes des Auslegers 106 angebracht ist. Die Wägevorrichtungen 102, 104 sind mit Schrauben 48 am Ausleger 106 befestigt. Jede Wägevorrichtung 102, 104 umfasst einen Krafteinleitungsabschnitt 112 mit einem Aufnahmeelement, das eine Aufnahme aufweist. In die Aufnahme kann eine Strebe eines Regalfachbodens eingebracht werden, so dass die Krafteinleitungsabschnitte der Wägevorrichtungen 102, 104 über dessen Streben den Regalfachboden stützen und halten. Dabei ist das Aufnahmeelement von oben frei zugänglich, so dass der Regalfachboden ausschließlich über die Krafteinleitungsabschnitte 112 der Wägevorrichtungen 102, 104 gestützt wird. Jeder Wägevorrichtung 102, 104 ist eine Leiterplatte zugeordnet, mit darauf angeordneter Elektronik, insbesondere eines Analog-Digital-Wandlers zur Verarbeitung wenigstens eines Ausgangssignals eines Dehnungsmessstreifens der Wägevorrichtungen 102, 104. Das Gewicht des Regalfachbodens sowie der Artikel, die auf dem Regalfachboden abgestellt sind, wird mit den Wägevorrichtungen 102, 104 gemessen. Aus den Gewichtswerten und insbesondere der Veränderung der Gewichtswerte der vier Wägevorrichtungen 102, 104 wird, wie in der Beschreibung mit Bezug zu Fig. 6 gezeigt, berechnet, an welcher Stelle auf dem Regalfachboden ein Artikel entnommen wird. So kann der entnommene Artikel identifiziert werden. Dies entspricht einer Entnahmeüberwachung des Regals.

In Fig. 4 ist eine Regalkonsole 100 gezeigt, die von vorne betrachtet die linke Regalkonsole eines Regalfachs bildet. Ebenso muss ein Regalfach eine rechte Regalkonsole umfassen, so dass der Regalfachboden auf der linken Seite von der linken Regalkonsole und auf der rechten Seite von der rechten Regalkonsole getragen wird. Linke Regalkonsole, rechte Regalkonsole und Regalfachboden bilden zusammen ein Regalfach, auf dem Artikel abgestellt und entnommen werden können. Auf die Darstellung der rechten Regalkonsole ist verzichtet. Die rechte Regalkonsole ist spiegelsymmetrisch zur linken Regalkonsole aufgebaut.

Fig. 5 zeigt schematisch drei Regalbereiche 211, 213, 215 auf einem Regalfachboden 200 und entsprechende Komponenten zur Entnahmeüberwachung. Die Bestimmung des Regalbereichs 211, 213, 215 aus dem ein Produkt aus dem Regalfachboden 200 entnommen wurde, erfolgt mittels Schwerpunktermittlung des Regalfachbodens 200.

Der Regalfachboden 200 wird von den vier Wägevorrichtungen 261, 262, 263, 264 schwebend gehaltert. Dabei handelt es sich um die Wägevorrichtungen 102, 104, die in die Regalkonsolen 100 integriert sind. Dabei stützen eine Regalkonsole 100 links des Regalfachbodens 200 und eine Regalkonsole 100 rechts des Regalfachbodens 200 den Regalfachboden 200. Die Wägevorrichtungen 261, 262, 263, 264 stützen mit ihren Krafteinleitungsabschnitten den Regalfachboden 200 an den Enden seiner Streben. Die Wägevorrichtungen 261, 262, 263, 264 bestimmen unabhängig voneinander eine wirkende Gewichtskraft, die durch den Regalfachboden 200 und der in den Regalbereichen 211, 213, 215 abgelegten Artikel entsteht. Dabei wirkt auf jede Wägevorrichtungen 261, 262, 263, 264 anteilig von dem Gesamtgewicht eine einzelne Gewichtskraft. Die Daten aus den Wägevorrichtungen 261, 262, 263, 264 werden an eine Auswerteinheit 265 übermittelt. Die Auswerteeinheit 265 bestimmt aus den einzelnen Gewichtsdaten der Wägevorrichtungen 261, 262, 263, 264 Schwerpunktkoordinaten des Regalfachbodens 200. Die Koordinaten im Regalbereich 211, 213, 215 beginnen in einer Ecke bei der Wägevorrichtung 263 mit den Koordinaten (0, 0) und erstrecken sich in waagrechter Richtung X und in senkrechter Richtung Y.

Zur Veranschaulichung der Schwerpunktsermittlung werden den Wägevorrichtungen 261, 262, 263, 264 wie in Fig. 5 dargestellt die entsprechenden Gewichtsdaten W261, W262, W263, W264 zugewiesen.

Die Bildung des Schwerpunkts in X Richtung bestimmt sich wie folgt:

$$(W261 + W262) / (W261 + W262 + W263 + W264)$$

Die Bildung des Schwerpunkts in Y Richtung bestimmt sich wie folgt:

$$(W261 + W264) / (W261 + W262 + W263 + W264)$$

Mit einem entsprechenden Normierungsfaktor, der die Größe des Regalfachbodens 200 berücksichtigt, sind Koordinaten in dem Regalbereich 211, 213, 215 bestimmbar, die den Schwerpunktkoordinaten des Regalfachbodens 200 entsprechen. Diese Koordinaten werden in der Auswerteeinheit 265 auf Basis der Daten der Wägevorrichtungen 261, 262, 263, 264 ermittelt. Des Weiteren bildet die Auswerteeinheit 265 ein Gesamtgewicht W261 + W262 + W263 + W264. Die Schwerpunktkoordinaten und das Gesamtgewicht werden von der Auswerteeinheit 265 an eine Steuereinrichtung 241 übermittelt. Das Regal umfasst einen Speicher 244, in dem eine Zuordnung zwischen Schwerpunktkoordinaten und Regalbereichen 211, 213, 215 abgelegt ist. Im Speicher 244 ist des Weiteren für jeden Regalbereich 211, 213, 215 das durchschnittliche Gewicht eines Stücks eines Artikels in diesem Regalbereich 211, 213, 215 abgelegt. Mit dieser Anordnung sind neben den in Fig. 5 gezeigten Regalbereichen 211, 213, 215, die nebeneinander in X Richtung angeordnet sind, auch Regalbereiche zu ermitteln, die in X und Y Richtung in Reihen und Spalten, also in einer Matrix, angeordnet sind.

Fig. 6 zeigt ein Verfahren zur automatischen Entnahmeüberwachung in einem Regal 60, das durch eine Steuereinrichtung 241 ausgeführt wird. In Schritt 230 werden die Regalbereiche 211, 213, 215 des Regalfachbodens 200 mit Artikeln bestückt. Dabei wird im Speicher 244 jedem Regalbereich 211, 213, 215 die Artikel zugewiesen und ein Gewicht pro Stück abgespeichert. Des Weiteren sind im Speicher 244 die X und Y Koordinaten jedes Regalbereichs 211, 213, 215 hinterlegt. Diese müssen nicht bei jedem Befüllen neu hinterlegt werden, da sie sich nicht ändern. Wird jedoch die Größe der Regalbereiche 211, 213, 215 und deren Anordnung durch eine Neuanordnung der Zwischenwände geändert, so muss im Speicher 244 die Zuordnung zwischen X und Y Koordinaten und Regalbereichen 211, 213, 215 aktualisiert werden. Somit ist im Speicher 244 hinterlegt, über welche X und Y Koordinaten sich jeder Regalbereich 211, 213, 215 erstreckt. In Schritt 231 wird mittels einer Auswerteeinheit 265 aus den Gewichtswerten der Wägevorrichtungen 261, 262, 263, 264 ein Ort bestimmt, an dem ein Artikel oder mehrere Artikel entnommen wurden und das Gesamtgewicht der entnommenen Artikel bestimmt. Die Bestimmung in Schritt 231 kann mit drei alternativen Verfahren ausgeführt werden, die mit Bezug zu Fig. 7 bis Fig. 9 im Folgenden beschrieben sind. In Schritt 232 wird mit der Steuereinrichtung 241 aufgrund der Koordinaten des Orts, an dem etwas entnommen wurde und mithilfe der Information aus dem Speicher 244 über die Anordnung der Regalbereiche 211, 213, 215 der zugehörige Regalbereich 211, 213, 215 bestimmt. In Schritt 233 wird aus dem bestimmten Gesamtgewicht der entnommenen Artikel und dem im Speicher 244 dem Regalbereich 211, 213, 215 zugeordneten Gewichtswert für einen Artikel die Anzahl der Artikel bestimmt, die aus dem Regalbereich 211, 213, 215 entnommen wurden. Es wird also die Stückzahl der entnommenen Gegenstände bestimmt. In Schritt 234 wird die Information, welche Artikel und wieviel Artikel entnommen wurden, mit der Kommunikationsvorrichtung 62 des Regals 60 an die Computing Cloud 63 geschickt. Das Verfahren wird dann mit Schritt 231 mit der Entnahme eines weiteren Artikels fortgesetzt.

Fig. 7 zeigt schematisch ein erstes Verfahren zur Bestimmung eines Ortes auf dem Regalfachboden 200, an dem ein Artikel entnommen wurde. In Schritt 271 werden alle Wägevorrichtungen 261, 262, 263, 264 tariert, das heißt der Regalfachboden 200 und alle darauf aufgebrachten Artikel werden so behandelt, als wären sie eine Vorlast für die Wägevorrichtungen 261, 262, 263, 264 und auf Null gesetzt. In Schritt 272 wird von zumindest einer Wägevorrichtung 261, 262, 263, 264 ein neuer Gewichtswert gemessen und von der Auswerteeinrichtung 265 empfangen. In Schritt 273 berechnet die Auswerteeinrichtung 265 aufgrund der aktuellen Gewichtsdaten der Wägevorrichtungen 261, 262, 263, 264 Schwerpunktkoordinaten. Diese Schwerpunktkoordinaten spiegeln nicht den Schwerpunkt des Regalfachbodens 200 wieder, sondern vielmehr den Schwerpunkt der Gewichtsänderung im Koordinatensystem des Regalfachbodens 200. Dies ist der Ort, an dem ein Artikel aus dem Regalfachboden 200 entnommen wurde. In Schritt 274 wird dieser Ort und die Änderung des Gewichts an die Steuereinrichtung 241 weitergegeben.

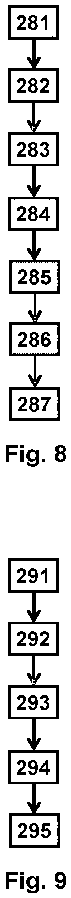

Fig.8 zeigt schematisch ein zweites Verfahren zur Bestimmung eines Ortes auf dem Regalfachboden 200, an dem ein Artikel entnommen wurde. In Schritt 281 werden Schwerpunktkoordinaten vom aktuellen Schwerpunkt des Regalfachbodens 200 inklusiver aller Artikel die darauf aufgelegt sind ermittelt. Dabei handelt es sich um den echten Schwerpunkt. Der Regalfachboden 200 oder zumindest die Artikel, die darauf aufgelegt sind, sind nicht tariert. In Schritt 282 wird von zumindest einer Wägevorrichtungen 261, 262, 263, 264 ein neuer Gewichtswert gemessen und von der Auswerteeinrichtung 265 empfangen. In Schritt 283 werden neue Schwerpunktkoordinaten von der Auswerteeinrichtung 265 aus den neuen Daten der Wägevorrichtungen 261, 262, 263, 264 bestimmt. In Schritt 284 wird aus den vorhergehenden Schwerpunktkoordinaten und den neuen Scherpunktkoordinaten ein Vektor gebildet, der die Verschiebung der Schwerpunktkoordinaten wiederspiegelt. Ausgehend vom vorhergehenden Schwerpunkt führt der Vektor, wenn er nicht skaliert wird, zum neuen Schwerpunkt. Anschließend wird Schritt 285 der Vektor mit Hilfe des Gesamtgewichts des Regalfachbodens und der Änderung des Gesamtgewichts skaliert. Der Ort, an dem ein Produkt aus dem Regalfachboden 200 entnommen wurde ergibt sich in Schritt 286, indem zu den vorhergehenden Schwerpunktkoordinaten der skalierte Vektor addiert wird. In Schritt 287 wird dieser Ort und die Änderung des Gewichts an die an die Steuereinrichtung 241 weitergegeben.

Fig. 9 zeigt schematisch ein drittes Verfahren zur Bestimmung eines Ortes auf dem Regalfachboden 200, an dem ein Artikel hinzugefügt oder entnommen wurde. In Schritt 291 wir durch alle Wägevorrichtungen 261, 262, 263, 264 jeweils ein Gewichtswert bestimmt, der vorhergehende Gewichtswert. In Schritt 292 wird von zumindest einer Wägevorrichtung 261, 262, 263, 264 ein neuer Gewichtswert gemessen und von der Auswerteeinrichtung 265 empfangen. In Schritt 293 berechnet die Auswerteeinheit 265 für jede Wägevorrichtung 261, 262, 263, 264 separat die Änderung des Gewichtswert, das heißt, die Auswerteeinheit bildet die Differenz aus dem neuen Gewichtswert und dem vorhergehenden Gewichtswert. In Schritt 294 berechnet die Auswerteeinrichtung 265 die Schwerpunktkoordinaten der Differenzwerte der vier Wägevorrichtung 261, 262, 263, 264. Diese Schwerpunktkoordinaten spiegeln nicht den Schwerpunkt des Regalfachbodens 200 wieder, sondern vielmehr den Schwerpunkt der Gewichtsänderung im Koordinatensystem des Regalfachbodens 200. Dies ist der Ort, an dem ein Artikel aus dem Regalfachboden 200 entnommen wurde. In Schritt 295 wird dieser Ort und die Änderung des Gewichts an die Steuereinrichtung 241 weitergegeben.

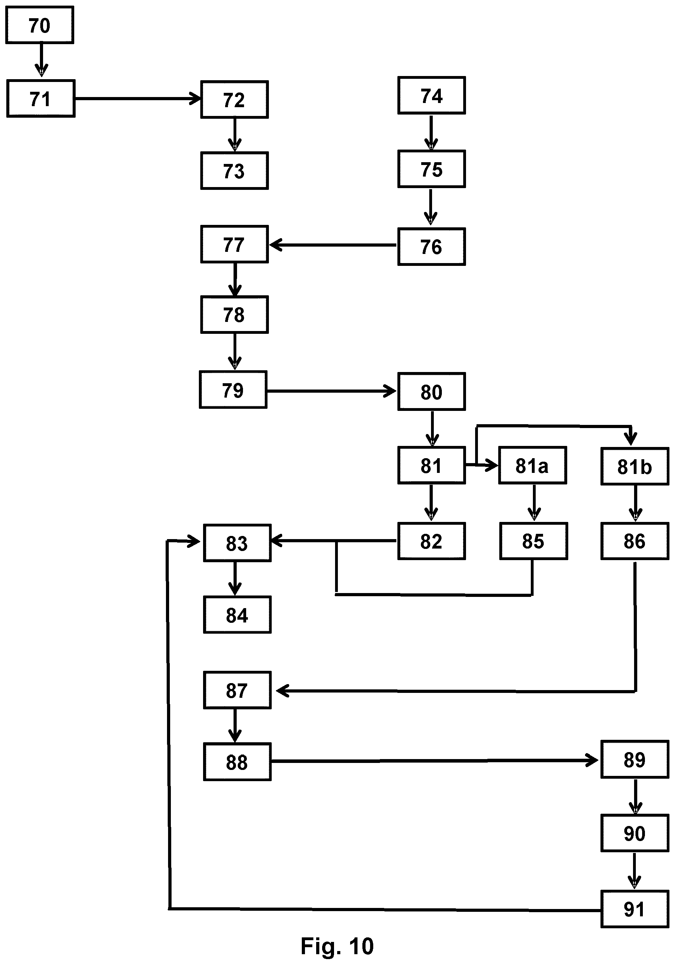

Fig. 10 zeigt schematisch ein Verfahren zum Selbst-Checkout in einem Ladengeschäft. Die Verfahrensschritte werden teilweise von einem Regal 60 mit automatischer Entnahmeüberwachung, teilweise von einer Verkaufsvorrichtung 10, 40 und teilweise von einer Steuervorrichtung 64 in einer Computing Cloud 63 oder auf einem Server in einem Netzwerk ausgeführt. Die Schritte auf der linken Seite in Fig. 10 werden vom Regal 60 mit automatischer Entnahmeüberwachung ausgeführt, während ein Kunde durch das Ladengeschäft geht und die Artikel für seinen Einkauf zusammenstellt. Die Schritte auf der rechten Seite in Fig. 10 werden von der Verkaufsvorrichtung 10, 40 ausgeführt. Die Schritte in der Mitte in Fig. 10 werden von der Computing Cloud 63 mit einer Steuervorrichtung 64 oder von einem Server, der ebenfalls die Funktion einer Steuervorrichtung wahrnehmen kann, ausgeführt.

Beim Selbst-Checkout in einem Ladengeschäft ist der Kunde dafür zuständig, seine Einkäufe selbst aus den Regalen 60 zu nehmen und zum Abschließen des Einkaufs die Produkte an einer Verkaufsvorrichtung 10, 40 zum Selbst-Checkout selbst zu bezahlen. Das Zusammenstellen der Abrechnung übernimmt die Computing Cloud. Das Ladengeschäft kann somit auf Kassenpersonal verzichten. Der Kunde ersetzt das Kassenpersonal und ist somit selbst Bediener der Selbst-Checkout Verkaufsvorrichtung 10, 40.

Der Kunde nimmt einen Einkaufswagen 11 oder Einkaufskorb 41 und geht damit durch das Ladengeschäft und nimmt sich die gewünschten Artikel aus den Regalen 60. Währenddessen überwachen die Regale 60 fortlaufend und automatisch die Entnahme von Artikeln durch die Kunden. Dies findet in einem ersten Schritt 70 statt. Dieser Schritt wird von allen Regalen und für alle Kunden ausgeführt. Es wird nicht von den Regalen detektiert, welcher Kunde etwas nimmt, sondern lediglich, dass etwas entnommen wurde. Die Entnahmeüberwachung und das Detektieren eines entnommenen Artikels sowie die Bestimmung dessen Artikeldaten erfolgt gemäß der Beschreibung mit Bezug zu Fig. 4 bis Fig. 9. In Schritt 71 sendet das Regal 60 über die Kommunikationsvorrichtung 62 die Artikeldaten der entnommenen Artikel und sowie deren Anzahl an die Computing Cloud 63.

Eine Steuervorrichtung 64 in der Computing Cloud 63 empfängt die Artikeldaten und die Anzahl der entnommenen Artikel in Schritt 72. In Schritt 73 fügt die Steuervorrichtung 64 die Artikeldaten und die Anzahl entnommener Artikel einer Liste von zur Bezahlung vorgesehener Artikel zu. Diese Schritte finden fortlaufend für alle Regale statt.

In Schritt 74 erkennt die Verkaufsvorrichtung 10, 40 das Auflegen eines Einkaufswagens 11 oder Einkaufskorbes 41 auf der Auflageplatte 13, 43 durch die Veränderung eines, mit einer Wägezelle 18, 48 und einer dazugehörigen Gewichtsverarbeitungsvorrichtung 24, 54, gemessenen Gewichtswertes und bestimmt das Gewicht des Einkaufswagens 11 oder des Einkaufskorbes 41 mitsamt dessen Inhalt. Dabei wird das Leergewicht des Einkaufswagens 41 oder des Einkaufskorbes 41 vom gemessenen Gewicht abgezogen, so dass ausschließlich das Gewicht der Artikel in dem Einkaufswagen 11 oder in dem Einkaufskorb 41 bestimmt werden. In Schritt 75 wird durch die Kamera 14, 44 der Verkaufsvorrichtung 10, 40 mindestens ein Bild einer offenen Seite des Einkaufswagens 11 oder des Einkaufskorbes gemacht 41. In Schritt 76 werden die Bilddaten und Gewichtsdaten über ein Netzwerk 25, 55 von der Verkaufsvorrichtung 10, 40 an die Computing Cloud 63 geschickt.

In Schritt 77 empfängt die Computing Cloud 63 die Bilddaten und Gewichtsdaten von der Verkaufsvorrichtung 10, 40. Die Steuervorrichtung 64 der Computing Cloud 63 umfasst eine Auswerteeinrichtung, die aufgrund der Gewichtsdaten und der Bilddaten in Schritt 78 alle Artikel, die sich in dem betreffenden Einkaufswagen 11 oder Einkaufskorb 41 befinden, detektiert. Dabei legt die Auswerteeinrichtung die Bilddaten zugrunde und führt ein Objekterkennungsverfahren durch. Um die Zuverlässigkeit und Genauigkeit des Objekterkennungsverfahrens zu erhöhen, wird die Liste der zur Bezahlung vorgesehenen Artikel zugrunde gelegt. Die Auswerteeinrichtung lässt nur die Erkennung von Artikeln zu, die auf der Liste der zur Bezahlung vorgesehenen Artikel stehen. So erhöht sich die Wahrscheinlichkeit der korrekten Objekterkennung, da Artikel, die nicht auf der Liste der zur Bezahlung vorgesehen Artikel vorhanden sind und somit auch nicht in dem Einkaufswagen oder Einkaufskorb sein können, nicht als mögliche Lösungen des Objekterkennungsverfahrens erlaubt sind. Des Weiteren lässt die Auswerteeinrichtung nur Lösungen zu, bei dem ein Set aus Artikeln erkannt wird, deren summierte Einzelgewichte dem von der Verkaufsvorrichtung 10, 40 übermittelten gemessenen Gewicht der Artikel im Einkaufswagen 11 oder Einkaufskorb 41 entspricht. Dabei ist es dem Fachmann bewusst, dass das Verfahren zur Objekterkennung auf Basis von Wahrscheinlichkeitsrechnung erfolgt und die Gewichtsdaten dazu dienen, in der Auswerteeinrichtung die Wahrscheinlichkeit für die eine oder die andere Lösung zu erhöhen. Artikel, die sich nicht auf der Liste der zur Bezahlung vorgesehener Artikel befinden, werden von der Auswerteeinrichtung mit einer Wahrscheinlichkeit von Null oder einer sehr geringen Wahrscheinlichkeit für das Vorhandensein im Einkaufswagen 11 oder Einkaufskorb 41 bewertet. In Schritt 79 sendet die Computing Cloud 63 die erkannten Artikel an die Verkaufsvorrichtung 10, 40.

In Schritt 80 empfängt die Verkaufsvorrichtung 10, 40 die erkannten Artikel von der Computing Cloud 63. In Schritt 81 startet die Verkaufsvorrichtung 10, 40 über die Ein-/ Ausgabeeinheit 20, 50 und die Bezahleinheit 30, 50a den Bezahlvorgang mit dem Kunden. Hat der Kunde die Artikel bezahlt, so kann er das Ladengeschäft verlassen. Die Verkaufsvorrichtung 10, 40 sendet dann in Schritt 82 eine Bestätigung an die Computing Cloud 63. Die Computing Cloud 63 empfängt in Schritt 83 die Bestätigung über den Bezahlvorgang der Artikel und löscht die bezahlten Artikel in Schritt 84 mit der Steuervorrichtung von der Liste der zu bezahlenden Artikel.

Stellt der Kunde in Schritt 81 fest, dass die ihm zur Bezahlung vorgeschlagenen Artikel nicht stimmen, so kann er in einem alternativen Schritt 81a oder 81b über die Ein-/Ausgabeeinheit 20, 50 dies in die Verkaufseinrichtung 10, 20 eingeben.

Wird dem Kunden beim Bezahlvorgang mindestens ein Artikel zu viel angezeigt, den der Kunde nicht kaufen möchte, wobei die anderen Artikel korrekt sind, so kann der Kunde über die Ein-/Ausgabeeinheit 30, 50 diesen mindestens einen Artikel in Schritt 81a manuell löschen. Die Verkaufseinrichtung 10, 20 sendet dann in einem Schritt 85 eine korrigierte Liste mit bezahlten Artikeln an die Computing Cloud 63 und das Verfahren wird mit Schritt 83 fortgesetzt.

Wird dem Kunden hingegen beim Bezahlvorgang ein Artikel zu wenig oder ein falscher Artikel angezeigt, so kann der Kunde im Schritt 81b dies in die Ein-/Ausgabeeinheit 30, 50 der Verkaufsvorrichtung 10, 40 eingeben. Im Schritt 86 sendet die Verkaufsvorrichtung 10, 40 eine Anfrage nach Artikelvorschlägen an die Computing Cloud 63. In Schritt 87 empfängt die Computing Cloud 63 die Anfrage nach Artikelvorschlägen. In Schritt 88 sendet die Computing Cloud 63 die Liste der zur Bezahlung vorgesehenen Artikel oder in Abhängigkeit der Bilddaten und der Gewichtsdaten eine Teilmenge davon an die Verkaufsvorrichtung 10, 40. In Schritt 89 empfängt die Verkaufsvorrichtung die Liste der zur Bezahlung vorgesehenen Artikel oder eine Teilmenge davon. Im Schritt 90 wird von der Verkaufsvorrichtung 10, 40 über die Ein-/Ausgabevorrichtung 20, 50 dem Kunden die Liste der zur Bezahlung vorgesehenen Artikel oder der Teilmenge davon zur Auswahl angeboten. So kann der Kunde die fehlenden oder falschen Artikel auswählen oder austauschen und die korrekten Artikel für den Bezahlvorgang in die Verkaufsvorrichtung 10, 40 eingeben. In Schritt 90 führt der Kunde den Bezahlvorgang für seinen Einkauf aus. In Schritt 91 sendet die Verkaufsvorrichtung 10, 40 die Liste der bezahlten Artikel an die Computing Cloud. Das Verfahren geht dann mit Schritt 83 in der Computing Cloud 63 weiter.

Die Funktionen verschiedener in den Zeichnungen gezeigter Elemente, inklusive der Funktionsblöcke, können durch dezidierte Hardware oder durch generische Hardware, die in der Lage ist Software auszuführen, im Zusammenhang mit der entsprechenden Software, realisiert werden. Falls die Funktionen mittels eines Prozessors zur Verfügung gestellt werden, können sie durch einen einzigen dezidierten Prozessor, einen einzigen geteilten Prozessor oder mehrere generische Prozessoren, die wiederum geteilt sein können, zur Verfügung gestellt werden. Die Funktionen können, ohne Einschränkung, durch einen digital signal processor (DSP), Netzwerk Prozessor, application specific integrated circuit (ASIC), field programmable gate array (FPGA), read only memory (ROM) mit gespeicherter Software, random access memory (RAM), und nichtflüchtige Speicher zur Verfügung gestellt werden.

**Patentansprüche**

1. Verfahren zum Betrieb einer Verkaufsvorrichtung für Waren, insbesondere Einzelhandelswaren, wobei dass das Verfahren die Schritte umfasst:

    - detektieren einer Entnahme einer Anzahl identischer Artikel, mit einem Regal (60) mit automatischer Entnahmeüberwachung, und Bestimmung von Artikeldaten des Artikels sowie der Anzahl der entnommenen Artikel, wobei das Regal (60) dazu folgende Schritte ausführt:

        - empfangen, durch eine Auswerteeinheit (265), eines Signals von mindestens zwei, vorzugsweise drei oder vier Wägezellen (261, 262, 263, 264), die in den Ecken eines starren Körpers (200), der einen Auslagebereich des Regals mit mindestens zwei Produktbereichen (211, 213, 215) bildet, angeordnet sind, wobei das Signal Daten enthält die den Gewichtskräften im Bereich der Ecken des starren Körpers (200) entspricht,
- ermitteln, durch die Auswerteeinheit (265), von Schwerpunktkoordinaten und einer Gesamtgewichtskraft aus den empfangenen Daten,
- empfangen, durch die Auswerteeinheit (265), eines neuen Signals von mindestens einer der Wägezellen (261, 262, 263, 264) wobei das neue Signal Daten enthält die einer neuen Gewichtskraft entsprechen und ermitteln durch die Auswerteeinheit (265) neuer Schwerpunktkoordinaten und einer neuen Gesamtgewichtskraft aus den von der mindestens einen Wägezellen (261, 262, 263, 264) im neuen Signal empfangenen Daten und gegebenenfalls den von den verbleibenden Wägezellen (261, 262, 263, 264) zuvor empfangenen Daten,
- ermitteln durch die Auswerteeinheit (265) eines Produktbereichs (211, 213, 215), anhand der Schwerpunktkoordinaten und der neuen Schwerpunktkoordinaten, und eines Gewichts, anhand der Gesamtgewichtskraft und der neuen Gesamtgewichtskraft, der aus dem Produktbereich (211, 213, 215) entnommenen Artikel, und
- weiterleiten durch die Auswerteeinheit (265) des ermittelten Produktbereichs und des ermittelten Gewichts an eine Steuereinrichtung (241) und
- bestimmen durch die Steuereinrichtung (241) der Artikeldaten der aus dem Regal (60) entnommenen Artikel aufgrund des ermittelten Produktbereichs (211, 213, 215) und einem dem Produktbereich (211, 213, 215) in einem Speicher (244) zugewiesenen Artikel
- bestimmen durch die Steuereinrichtung (241) der Anzahl der entnommenen Artikel aufgrund des ermittelten Gewichts und eines in dem Speicher (244) abgespeicherten spezifischen Gewichts des Artikels,
- wobei das Verfahren zum Betrieb der Verkaufsvorrichtung die weiteren Schritte umfasst:

- empfangen, durch eine Steuervorrichtung (63), der Artikeldaten und Anzahl der aus dem Regal (60) entnommenen Artikel,
- hinzufügen, durch die Steuervorrichtung (63), der Artikeldaten und Anzahl der entnommenen Artikel zu einer Liste von zur Bezahlung vorgesehener Artikel, wobei die Liste von zur Bezahlung vorgesehen Artikel die Artikel umfasst, die aus den Regalen (60) genommen wurden und noch nicht an der Kasse bezahlt wurden,
- detektieren, mit einer Detektionsvorrichtung, von Artikeln, für die ein Bezahlvorgang ausgeführt werden soll, wobei die Detektionsvorrichtung mindestens einen Sensor (14, 44, 18, 48) und eine Auswerteeinrichtung zur Erkennung der Artikel, für die der Bezahlvorgang ausgeführt werden soll, umfasst und zur Erkennung der Artikel, für die der Bezahlvorgang ausgeführt werden soll, der Auswerteeinrichtung mindestens Daten des Sensors und die Liste der zur Bezahlung vorgesehenen Artikel als Eingangsgrößen zur Verfügung gestellt werden, und wobei die Auswerteeinrichtung nur die Erkennung von Artikeln zulässt, die zur Liste der zur Bezahlung vorgesehenen Artikel gehören.

2. Verfahren zum Betrieb einer Verkaufsvorrichtung nach Anspruch 1, wobei der mindestens eine Sensor der Detektionsvorrichtung mindestens eine Kamera (14, 44), insbesondere mindestens eine CCD Kamera, ist und die Daten des mindestens einen Sensors Bilddaten sind und/oder mindestens eine der Detektionsvorrichtung zugeordnete Wägezelle (18, 48) ist und die Daten des mindestens einen Sensors Gewichtsdaten sind.

3. Verfahren zum Betrieb einer Verkaufsvorrichtung nach Anspruch 1 oder 2, wobei der Schritt des Detektierens von Artikeln, für die ein Bezahlvorgang ausgeführt werden soll, den Schritt umfasst:

- anwenden eines Verfahrens zur Objekterkennung in der Auswerteeinrichtung, wobei das Verfahren zur Objekterkennung in den Daten des mindestens einen Sensors objektbeschreibende Attribute erkennt und diese mit objektbeschreibenden Attributen von Artikeln vergleicht, die in der Liste der zur Bezahlung vorgesehenen Artikel sind.

4. Verfahren zum Betrieb einer Verkaufsvorrichtung nach einem der Ansprüche 1 bis 3, wobei bei einer Änderung der Gesamtgewichtskraft ein Vektor zwischen den vorhergehenden Schwerpunktkoordinaten und den neuen Schwerpunktkoordinaten ermittelt wird, und der von der Steuereinheit bestimmte Produktbereich (211, 213, 215) aus dem Vektor und der Änderung der Gesamtgewichtskraft von der Steuereinheit ermittelt wird.

5. Verfahren zum Betrieb einer Verkaufsvorrichtung nach einem der Ansprüche 1 bis 3, wobei alle in dem Regal (60) angeordneten Wägezellen (261, 262, 263, 264) periodisch und gleichzeitig tariert werden.

6.  Verfahren zum Betrieb einer Verkaufsvorrichtung nach einem der Ansprüche 1 bis 3, wobei zur Ermittlung der neuen Schwerpunktskoordinaten für jede Wägezelle die Differenz aus einem neuen Gewichtswert und einem vorhergehenden Gewichtswert gebildet wird und aus den vier Differenzwerten die neuen Schwerpunktskoordinaten ermittelt werden.

7.  Verfahren zum Betrieb einer Verkaufsvorrichtung nach einem der Ansprüche 3 bis 6, wobei ein Verfahren zur Objekterkennung ein optisches Verfahren ist und auf Kantenerkennung, Transformationen, Größen und/oder Farberkennung beruht.

8.  Verfahren zum Betrieb einer Verkaufsvorrichtung nach einem der Ansprüche 3 bis 7, wobei ein Verfahren zur Objekterkennung ein Verfahren ist, das einen gemessenen Gewichtswert mit dem Gewicht mindestens eines Artikel auf der Liste der zur Bezahlung vorgesehenen Artikel vergleicht.

9.  Verfahren zum Betrieb einer Verkaufsvorrichtung nach einem der Ansprüche 1 bis 8, wobei das Verfahren folgende Schritte umfasst:

    - ermitteln eines Gesamtpreises für einen Bezahlvorgang aus der Summe aller Einzelpreise für die detektierten Artikel, für die ein Bezahlvorgang ausgeführt werden soll, und
    - ausführen eines Bezahlvorgangs über ein Mobile Payment Verfahren, eine EC-Karte oder Kreditkarte oder über einen Barzahl-Vorgang.


**Claims**

1.  Method for operating a sales apparatus for goods, in particular retail goods, wherein the method comprises the steps of:

    - detecting removal of a number of identical articles using a shelf (60) with automatic removal monitoring, and determining article data relating to the article and the number of articles removed, wherein the shelf (60) carries out the following steps for this purpose:

        - receiving, by means of an evaluation unit (265), a signal from at least two, preferably three or four, load cells (261, 262, 263, 264) which are arranged in the corners of a rigid body (200) that forms a display region of the shelf with at least two product regions (211, 213, 215), wherein the signal contains data corresponding to the weight forces in the region of the corners of the rigid body (200),
        - determining, by means of the evaluation unit (265), centre-of-gravity coordinates and a total weight force from the received data,
        - receiving, by means of the evaluation unit (265), a new signal from at least one of the load cells (261, 262, 263, 264), wherein the new signal contains data corresponding to a new weight force, and determining, by means of the evaluation unit (265), new centre-of-gravity coordinates and a new total weight force from the data received from the at least one load cell (261, 262, 263, 264) in the new signal and possibly the data previously received from the remaining load cells (261, 262, 263, 264),
        - determining, by means of the evaluation unit (265), a product region (211, 213, 215) on the basis of the centre-of-gravity coordinates and the new centre-of-gravity coordinates, and a weight of the articles removed from the product region (211, 213, 215) on the basis of the total weight force and the new total weight force, and
        - forwarding, by means of the evaluation unit (265), the determined product region and the determined weight to a control device (241), and
        - determining, by means of the control device (241), the article data relating to the articles removed from the shelf (60) on the basis of the determined product region (211, 213, 215) and an article assigned to the product region (211, 213, 215) in a memory (244),
        - determining, by means of the control device (241), the number of articles removed on the basis of the determined weight and a specific weight of the article stored in the memory (244),
        - wherein the method for operating the sales apparatus comprises the further steps of:

            - receiving, by means of a control apparatus (63), the article data and number of articles removed from the shelf (60),
            - adding, by means of the control apparatus (63), the article data and number of articles removed to a list of articles intended for payment, wherein the list of articles intended for payment comprises the articles that have been removed from the shelves (60) and have not yet been paid for at the cash register,
- detecting, with a detection apparatus, articles for which a payment operation is to be carried out, wherein the detection apparatus comprises at least one sensor (14, 44, 18, 48) and an evaluation device for recognizing the articles for which the payment operation is to be carried out, and, for recognizing the articles for which the payment operation is to be carried out, at least data from the sensor and the list of articles intended for payment are made available to the evaluation device as input variables, and wherein the evaluation device only allows the recognition of articles belonging to the list of articles intended for payment.

2. Method for operating a sales apparatus according to Claim 1, wherein the at least one sensor of the detection apparatus is at least one camera (14, 44), in particular at least one CCD camera, and the data from the at least one sensor are image data, and/or the at least one sensor is at least one load cell (18, 48) assigned to the detection apparatus and the data from the at least one sensor are weight data.

3. Method for operating a sales apparatus according to Claim 1 or 2, wherein the step of detecting articles for which a payment operation is to be carried out comprises the step of:

- using an object recognition method in the evaluation device, wherein the object recognition method recognizes object-describing attributes in the data from the at least one sensor and compares these with object-describing attributes of articles that are in the list of articles intended for payment.

4. Method for operating a sales apparatus according to one of Claims 1 to 3, wherein, in the event of a change in the total weight force, a vector between the previous centre-of-gravity coordinates and the new centre-of-gravity coordinates is determined, and the product region (211, 213, 215) determined by the control unit is determined by the control unit from the vector and the change in the total weight force.

5. Method for operating a sales apparatus according to one of Claims 1 to 3, wherein all the load cells (261, 262, 263, 264) arranged in the shelf (60) are tared periodically and simultaneously.

6. Method for operating a sales apparatus according to one of Claims 1 to 3, wherein, in order to determine the new centre-of-gravity coordinates for each load cell, the difference between a new weight value and a previous weight value is formed and the new centre-of-gravity coordinates are determined from the four difference values.

7. Method for operating a sales apparatus according to one of Claims 3 to 6, wherein an object recognition method is an optical method and is based on edge recognition, transformations, sizes and/or colour recognition.

8. Method for operating a sales apparatus according to one of Claims 3 to 7, wherein an object recognition method is a method that compares a measured weight value with the weight of at least one article on the list of articles intended for payment.

9. Method for operating a sales apparatus according to one of Claims 1 to 8, wherein the method comprises the following steps of:

- determining a total price for a payment operation from the sum of all individual prices for the detected articles for which a payment operation is to be carried out, and
- carrying out a payment operation via a mobile payment method, an EC card or credit card or via a cash payment operation.

**Revendications**

1. Procédé permettant de faire fonctionner un dispositif de vente pour marchandises, en particulier pour marchandises au détail, le procédé comprenant les étapes consistant à :

- détecter un retrait d'un nombre d'articles identiques, comprenant un rayonnage (60) à surveillance de retrait automatique, et déterminer des données d'article de l'article ainsi que le nombre des articles retirés, le rayonnage (60) exécutant à cet effet les étapes suivantes consistant à :

- recevoir, par une unité d'évaluation (265), un signal d'au moins deux, de préférence trois ou quatre, cellules de pesée (261, 262, 263, 264) qui sont disposées dans les coins d'un corps rigide (200) qui constitue une zone d'étalage du rayonnage avec au moins deux zones de produit (211, 213, 215), dans lequel le signal contient des données qui correspondent aux poids au niveau des coins du corps rigide (200),
- établir, par l'unité d'évaluation (265), des coordonnées de barycentre et un poids total à partir des données reçues,
- recevoir, par l'unité d'évaluation (265), un nouveau signal d'au moins l'une des cellules de pesée (261, 262, 263, 264), dans lequel le nouveau signal contient des données qui correspondent à un nouveau poids, et établir, par l'unité d'évaluation (265), de nouvelles coordonnées de barycentre et d'un nouveau poids total à partir des données reçues par ladite au moins une cellule de pesée (261, 262, 263, 264) dans le nouveau signal et le cas échéant des données reçues précédemment par les cellules de pesée restantes (261, 262, 263, 264),
- établir, par l'unité d'évaluation (265), une zone de produit (211, 213, 215) à l'aide des coordonnées de barycentre et des nouvelles coordonnées de barycentre, et un poids, à l'aide du poids total et du nouveau poids total des articles retirés de la zone de produit (211, 213, 215), et
- retransmettre, par l'unité d'évaluation (265), la zone de produit établie et du poids établi à un dispositif de commande (241), et
- déterminer, par le dispositif de commande (241), les données d'article des articles retirés du rayonnage (60) en raison de la zone de produit établie (211, 213, 215) et d'un article attribué à la zone de produit (211, 213, 215) dans une mémoire (244),
- déterminer, par le dispositif de commande (241), le nombre des articles retirés en raison du poids établi et d'un poids spécifique de l'article, mémorisé dans la mémoire (244),
- le procédé permettant de faire fonctionner le dispositif de vente comprenant les étapes supplémentaires consistant à :

  - recevoir, par un dispositif de commande (63), les données d'article et le nombre des articles retirés du rayonnage (60),
  - ajouter, par le dispositif de commande (63), les données d'article et le nombre des articles retirés à une liste d'articles prévus pour le paiement, dans lequel la liste d'articles prévus pour le paiement comprend les articles qui ont été retirés des rayonnages (60) et n'ont pas encore été payés à la caisse,
  - détecter, par un dispositif de détection, des articles pour lesquels une opération de paiement est à effectuer, dans lequel le dispositif de détection comprend au moins un capteur (14, 44, 18, 48) et un dispositif d'évaluation pour reconnaître les articles pour lesquels l'opération de paiement est à effectuer, et pour reconnaître les articles pour lesquels l'opération de paiement est à effectuer, au moins des données du capteur et la liste des articles prévus pour le paiement sont mises à disposition du dispositif d'évaluation sous forme de grandeurs d'entrée, et dans lequel le dispositif d'évaluation ne permet que la reconnaissance d'articles qui font partie de la liste des articles prévus pour le paiement.

2. Procédé permettant de faire fonctionner un dispositif de vente selon la revendication 1, dans lequel ledit au moins un capteur du dispositif de détection est au moins une caméra (14, 44), en particulier au moins une caméra CCD, et les données dudit au moins un capteur sont des données d'image, et/ou est au moins une cellule de pesée (18, 48) attribuée au dispositif de détection, et les données dudit au moins un capteur sont des données de poids.

3. Procédé permettant de faire fonctionner un dispositif de vente selon la revendication 1 ou 2, dans lequel l'étape de détection d'articles pour lesquels une opération de paiement est à effectuer comprend l'étape consistant à :

  - appliquer un procédé de reconnaissance d'objet dans le dispositif d'évaluation, dans lequel le procédé de reconnaissance d'objet reconnaît dans les données dudit au moins un capteur des attributs décrivant un objet et les compare avec des attributs décrivant un objet d'articles qui se trouvent sur la liste des articles prévus pour le paiement.

4. Procédé permettant de faire fonctionner un dispositif de vente selon l'une quelconque des revendications 1 à 3, dans lequel en cas de modification du poids total, un vecteur entre les coordonnées de barycentre précédentes et les nouvelles coordonnées de barycentre est établi, et la zone de produit (211, 213, 215) déterminée par l'unité de commande est établie par l'unité de commande à partir du vecteur et de la modification du poids total.

5. Procédé permettant de faire fonctionner un dispositif de vente selon l'une quelconque des revendications 1 à 3, dans lequel toutes les cellules de pesée (261, 262, 263, 264) disposées dans le rayonnage (60) sont tarées périodiquement et simultanément.

6. Procédé permettant de faire fonctionner un dispositif de vente selon l'une quelconque des revendications 1 à 3, dans lequel pour l'établissement des nouvelles coordonnées de barycentre pour chaque cellule de pesée, la différence d'une nouvelle valeur de poids et d'une valeur de poids précédente est formée, et les nouvelles coordonnées de barycentre sont établies à partir de quatre valeurs différentielles.

7. Procédé permettant de faire fonctionner un dispositif de vente selon l'une quelconque des revendications 3 à 6, dans lequel un procédé de reconnaissance d'objet est un procédé optique, et est basé sur la détection de contours, des transformations, la reconnaissance de dimensions et/ou de couleurs.

8. Procédé permettant de faire fonctionner un dispositif de vente selon l'une quelconque des revendications 3 à 7, dans lequel un procédé de reconnaissance d'objet est un procédé qui compare une valeur de poids mesurée avec le poids d'au moins un article sur la liste des articles prévus pour le paiement.

9. Procédé permettant de faire fonctionner un dispositif de vente selon l'une quelconque des revendications 1 à 8, le procédé comprenant les étapes suivantes consistant à :

- établir un prix total pour une opération de paiement à partir de la somme des prix unitaires pour les articles détectés pour lesquels une opération de paiement est à effectuer, et
- effectuer une opération de paiement par un procédé de paiement mobile, une carte de débit ou une carte de crédit ou par une opération de paiement en espèces.

**Fig. 1**

**Fig. 2**

**Fig. 3**

**Fig. 4**

**Fig. 5**

Fig. 6

Fig. 7

281

282

283

284

285

286

287

**Fig. 8**

291

292

293

294

295

**Fig. 9**

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1717772 A1
- US 2019026593 A1
- US 2012284132 A1

- EP 3620760 B1
- EP 19220148
- US 10520353 B1